# EUROPÄISCHE PATENTSCHRIFT

(11) **EP 2 210 754 B1**
(45) Veröffentlichungstag und Bekanntmachung des Hinweises auf die Patenterteilung: **28.11.2012**
(21) Anmeldenummer: 09014938.6
(22) Anmeldetag: 02.12.2009
(51) Int. Cl.: B60J 7/12

(54) **Faltverdeck mit veränderbarer Spannung des Verdeckstoffs**
Collapsible roof with adjustable tension of the roof material
Capote pliable ayant une tension variable du tissu textile

(30) Priorität: 23.01.2009 DE 102009005995
(43) Veröffentlichungstag der Anmeldung: 28.07.2010
(73) Patentinhaber: Magna Car Top Systems GmbH, 74321 Bietigheim-Bissingen (DE)
(72) Erfinder: Reck, Philip, 71229 Leonberg (DE)
(74) Vertreter: Völger, Silke Beatrix

(56) Entgegenhaltungen:
- EP-A1- 1 314 601
- EP-A1- 1 680 300
- DE-A1- 4 104 658
- DE-A1-102004 042 318
- DE-B- 1 192 529

## Beschreibung

Die Erfindung betrifft ein Faltverdeck mit veränderbarer Spannung des Verdeckstoffs für Fahrzeuge, vorzugsweise für Kraftfahrzeuge, nach dem Oberbegriff des Anspruches 1.

Es sind Cabriolet-Fahrzeuge bekannt, die einen flexiblen Dachbezug über ein Dachgestell gespannt aufweisen, wobei im hinteren Bereich des Dachbezugs ein Spannbügel den Verdeckstoff spannt und der Spannbügel in gespannter Position auf der Karosserie aufliegt. Der Verdeckstoff ist hierbei beispielsweise über einen Keder in einer entlang des Spannbügels verlaufenden nutenförmigen Aufnahme gehalten. Beim Schwenken des Spannbügels bleibt der Verdeckstoff stets fest mit dem Spannbügel verbunden.

Aus der DE 41 04 658 C2 ist ein Klappverdeck für einen Personenwagen bekannt, bei dem ein Dachgestell zwischen einer Innenbespannung und einer Außenbespannung angeordnet und mit diesen verbunden ist. Das Dachgestell weist einen U-förmigen Spannbügel auf, an dessen Enden Haltewinkel zur Begrenzung des Seitenscheibenausschnitts der Außenbespannung (Verdeckstoff) und der Innenbespannung (Innenhimmel) vorhanden sind. Bei aufgeklapptem Verdeck sind die Unterkannten der Seitenflügel der Innenbespannung mittels unter geringer Spannung stehender Verbindungslaschen aus elastischem Gewebe mit dem Spannbügel verbunden. Mittels dieser Befestigung der Innenbespannung wird beim Öffnen und beim Schließen eine notwendige Längenänderung der Innenbespannung erreicht, so dass die Innenbespannung stets eine bevorzugte Position einnehmen kann.

In der EP 1 680 300 B1 wird ein Cabriolet-Fahrzeug mit einem Spannbügel zur Spannung des Verdeckstoffs beschrieben. Um die Verdeckspannung während des Öffnungsvorgangs bzw. des Schließvorgangs variieren zu können, kann der Spannbügel entsprechend seiner Bewegungsrichtung (Auf- und Abschwenken) über unterschiedliche Bewegungszentren geschwenkt werden. Hierbei erfährt der Spannbügel außer seiner Schwenkbewegung zusätzlich eine Bewegung in Längsrichtung des Fahrzeugs, so dass die Spannung des Verdeckstoffs verringert wird. Beim Schließen des Verdecks wird der Spannbügel entgegen der Fahrtrichtung, also nach hinten verschoben, wobei der Verdeckstoff gespannt wird. Der Verdeckstoff ist fest mit dem Spannbügel verbunden.

Die EP 1 314 601 B1 beschreibt ein verstellbares Fahrzeugdach, das ein zwischen einer Schließstellung und einer Ablagestellung verstellbares Faltverdeck mit einem Verdeckgestänge und einem Verdeckstoff aufweist. Das Verdeckgestänge zeigt einen Spannbügel auf, an dessen Unterkannte bzw. Randbereich der Verdeckstoff befestigt ist. Durch Absenken des Spannbügels wird der Verdeckstoff gespannt, wobei eine aus zwei Teilen bestehende Sturmstange, zwischen einem Hauptlenker und dem Spannbügel angeordnet, die abgesenkte Position des Spannbügels fixiert und somit die Spannung des Verdeckstoffs dauerhaft aufrecht erhält. Eine Längenkompensation des Verdeckstoffs ist nicht vorgesehen.

Die DE 10 2004 042318 A1 zeigt ein Faltverdeck gemäß dem Oberbegriff des Anspruchs 1.

Der Erfindung liegt die Aufgabe zugrunde, die Spannung des Verdeckstoffs während des Öffnungs- bzw. Schließvorgangs zu reduzieren, so dass der Verdeckstoff ein besseres Ablageverhalten aufweist und der Verdeckstoff mit einer im Verdeckstoff angeordneten Heckscheibe ohne zusätzliche Hilfsmittel geordnet gefaltet werden kann, wobei der in seiner Spannung reduzierte Verdeckstoff bei Beendigung des Öffnungs- bzw. Schließvorgangs wieder in den ursprünglichen Spannungszustand zurückgeführt wird. Die Reduzierung der Spannung des Verdeckstoffs soll einfach sowie kostengünstig zu erzielen sein.

Diese Aufgabe wird erfindungsgemäß mit den kennzeichnenden Merkmalen des Anspruches 1 gelöst. Weitere, die Erfindung ausgestaltende Merkmale sind in den Unteransprüchen enthalten.

Bei dem erfindungsgemäßen Faltverdeck mit veränderbarer Spannung des Verdeckstoffs wird besonders Wert auf eine einfache und kostengünstige Ausführung gelegt. Hierzu erfährt der Verdeckstoff bei sich öffnendem Verdeck einen Längenausgleich in Form einer Längsverschiebung, wodurch eine Überdehnung des Verdeckstoffs vermieden wird. Weiter ist es möglich, durch die Reduzierung der Spannung des Verdeckstoffs ein sicheres, reproduzierbares Ablegen des Verdeckstoffs zu erreichen. Dies ist besonders wichtig, da bei nicht optimal positioniert abgelegtem Verdeck der Verdeckstoff unkontrolliert Falten bilden kann und somit zu erheblichen Flatter- und Geräuschbelästigungen führt.

Die Reduzierung der Spannung des Verdeckstoffs erfolgt über eine bereichsweise Verschiebung der hinteren Begrenzung des Verdeckstoffs über den Spannbügel.

Bei geschlossenem Verdeck umgreift der Verdeckstoff die hintere Kante des Spannbügels, so dass der Verdeckstoff unter Spannung gehalten wird. Bei sich öffnendem Verdeck gleitet die hintere Begrenzung des Verdeckstoffs über die hintere Kante des Spannbügels in Richtung der Heckscheibe. Dies erfolgt nahezu über die gesamte Breite des Spannbügels, wobei die hintere Kante des Verdeckstoffs so weit über den Spannbügel in Richtung der Heckscheibe gleitet, dass sowohl in Längsrichtung des Verdecks als auch in seitlichen Bereichen des Verdecks ausreichend Stofflänge zur Faltenbildung zur Verfügung steht.

Diese Maßnahme ermöglicht es, dass auf zusätzliche Ansteuerungen / Anlenkungen für die Bewegung der Heckscheibe verzichtet werden kann.

Ebenso kann der Verdeckstoff leicht über entsprechende Spannmittel wie elastische Bänder oder dergleichen in eine bevorzugte Faltenlage gezogen werden, ohne dass sich unerwünschte Knicke, Falten oder Verwerfungen bilden können. Auf diese Weise wird es möglich, dass bei geschlossenem Verdeck keine Scheuerstellen oder Stoßkanten auftreten. Die Faltenbildung des Verdecks kann daher so gewählt werden, dass die Falten in unkritischen Bereichen angeordnet sind und diese nicht mit weiteren Teilen des Verdecks, des Verdeckkastens oder des Verdeckgestänges in Kontakt treten können.

Die Befestigung der hinteren Begrenzung des Verdeckstoffs erfolgt über ein Spannseil, das in nutenförmigen Aufnahmen an der Unterseite des Spannbügels eingreift. Selbstverständlich ist diese nutenförmige Aufnahme im Bereich der verschiebbaren hinteren Kante des Verdeckstoffs so ausgebildet, dass das Spannseil aus dieser Aufnahme herausgleiten kann, aber bei geschlossenem Verdeck genügend Halt für die sichere Positionierung des Spannseils bietet. Das Spannseil ist beispielsweise an einem Lenker des Verdeckgetriebes oder an der C-Säule befestigt, welche beim Öffnen und beim Schließen des Verdecks eine Bewegung in Richtung des Spannbügels ausführen.

Durch diese Maßnahme wird der hintere, untere Randbereich des Verdeckstoffs verschoben, was einer Längung / Streckung des Verdeckstoffs entspricht. Um einen vergleichbaren Effekt zu erreichen, sind aufwändige und komplizierte Lenkergetriebe notwendig, die den Spannbügel während dessen Schwenkbewegung zusätzlich in oder entgegen der Fahrtrichtung bewegen. Derartige Maßnahmen sind teuer und benötigen darüber hinaus einen zusätzlichen Einbauraum.

Als Alternative kann, für den Fall dass die Verschiebung des Verdeckstoffs nicht ausreichend ist, das Spannseil über wenigstens eine Feder an wenigstens einem Lenker des Verdeckgetriebes oder der C-Säule befestigt sein, so dass bei der Schwenkbewegung des Spannbügels eine zusätzliche Verschiebung des Verdeckstoffs möglich wird.

Weitere Merkmale der Erfindung ergeben sich aus den weiteren Ansprüchen, der Beschreibung und den Zeichnungen.

Die Erfindung wird anhand einer in den Zeichnungen dargestellten Ausführungsform näher erläutert. Es zeigt:
- Fig. 1: einen Spannbügel in angehobener Position mit bereichsweise verschobenem Verdeckstoff während dem Öffnen oder Schließen des Fahrzeugverdecks,
- Fig. 2: einen Spannbügel in teilweise angehobener Position mit bereichsweise verschobenem Verdeckstoff während dem Öffnen oder Schließen des Fahrzeugverdecks,
- Fig. 3: einen Spannbügel in abgesenkter Position bei geschlossenem Fahrzeugverdeck sowie den Spannbügel vollständig umgreifenden Verdeckstoff,
- Fig. 4: Schnitt durch den Spannbügel im Eckbereich bzw. im Schenkel mit in nutförmiger Aufnahme gehaltenem Verdeckstoff,
- Fig. 5: Längsschnitt in mittiger Lage durch den Spannbügel mit erweiterter nutförmiger Aufnahme und teilweise um die hintere Kante des Spannbügels verschobenem Verdeckstoff,
- Fig. 6: die Anbindung des Spannseils sowie die Spannseilführung mittels einer Schiene,
- Fig. 7: den hinteren Bereich des geschlossenen Fahrzeugverdecks mit Sturmstange und Spannseilführung mittels einer Schiene.

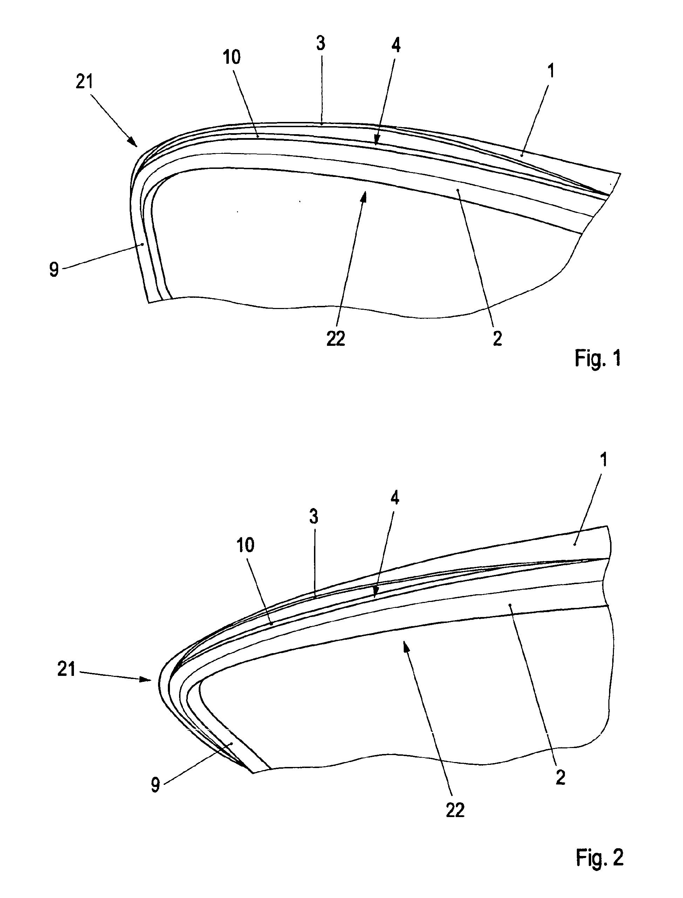

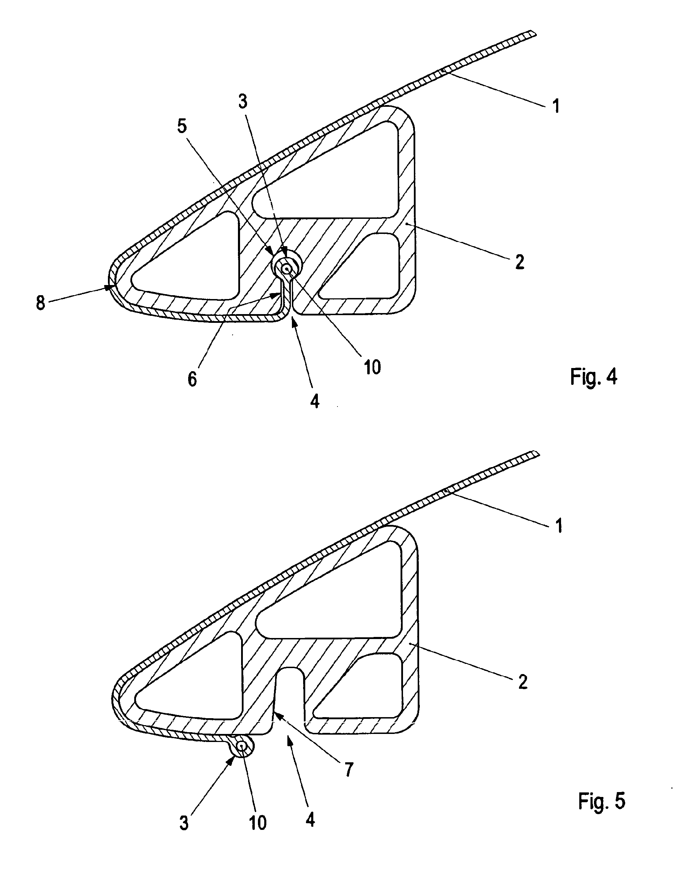

In Fig. 1 ist ein nach oben geschwenkter Spannbügel 2 abgebildet, bei dem die Begrenzung des Verdeckstoffs 1 aus dessen aufnehmender nutenförmiger Aufnahme 4 teilweise herausgeglitten ist. Dieses Herausgleiten entspricht einer Verschiebung des Verdeckstoffs 1, wobei der Endbereich 3 des Verdeckstoffs 1 um die hintere Kante des Spannbügels 2 bis auf die Oberseite des Spannbügels 2 verschoben ist. (siehe auch Fig. 5).

Der Spannbügel 2 ist in der Regel U-förmig gestaltet, wobei die beiden seitlichen Schenkel 9 mit ihren Enden an Teilen des Lenkergetriebes des Dachgestänges oder am Hauptlager des Lenkergetriebes schwenkbar befestigt sind.

Entlang der Schenkel 9 sowie in den Eckbereichen 21 ist der Endbereich des Verdeckstoffs 1 fest in der nutförmigen Aufnahme 4 gehalten, so dass ein Herausgleiten wie im Bereich des Stegs 22 nicht erfolgen kann.

Eine Zwischenstellung des Spannbügels 2 bei teilweise geöffnetem oder geschlossenem Verdeck ist in Fig. 2 dargestellt. Hierbei ist der Endbereich 3 des Verdeckstoffs 1 im Bereich des Stegs 22 nur teilweise aus dessen aufnehmender Nut 4 herausgeglitten, wobei der herausgeglittene Endbereich 3 des Verdeckstoffs 1 sich etwa an der Hinterkante 8 des Spannbügels 2 befindet.

Auch hier sind im Bereich der Schenkel 9 sowie der Eckbereiche 21 des Spannbügels 2 die Endbereiche des Verdeckstoffs 1 fest in der Nut 4 aufgenommen.

Die feste Aufnahme im Bereich der Schenkel 9 und der Eckbereiche 21 des Spannbügels 2 stellen sicher, dass sich der Endbereich 3 des Verdeckstoffs 1 im Bereich des Stegs 22 bei sich absenkendem Spannbügel 2 wieder vollständig in die aufnehmende Nut 4 einfinden kann.

Die Aufnahme dieses Endbereichs 3 des Verdeckstoffs 1 in einer nutförmigen Aufnahme 4 entlang des Spannbügels 2 ist zwingend notwendig, da ansonsten bei geschlossenem Verdeck und hohen Fahrgeschwindigkeiten sich der Verdeckstoff 1 durch den wirkenden Unterdruck zumindest teilweise vom Spannbügel 2 abhebt bzw. ungewollt verschieben kann. Die Folgen hiervon sind undichte Stellen, ein unharmonisches Erscheinungsbild sowie erhebliche Geräuschbelastungen. Weiter führt eine solche Belastung zu einer Dehnung des Verdeckstoffs 1 bzw. kann zu Beschädigungen in Form von Rissen im Verdeckstoff 1 führen.

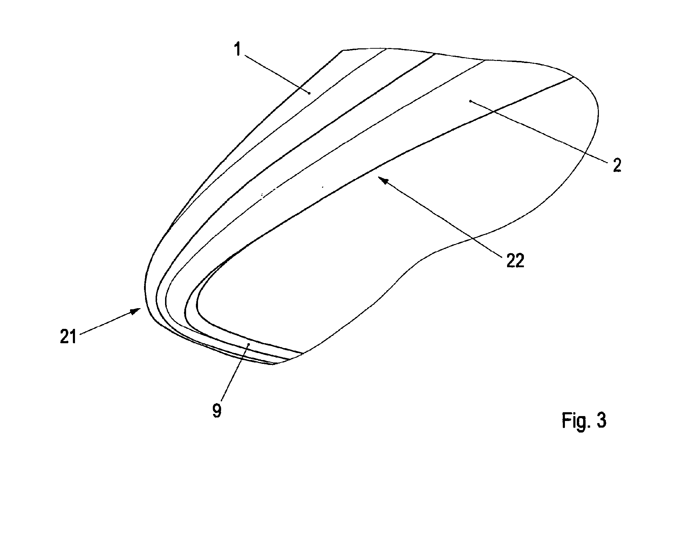

Fig. 3 zeigt einen Spannbügel 2 in vollständig abgesenkter Position und bei geschlossenem Fahrzeugverdeck. Der Endbereich 3 des Verdeckstoffs 1 umgreift hierbei die Hinterkante 8 des Spannbügels 2 und ist vollständig in der Nut 4 aufgenommen. In der Endlage des Spannbügels 2 erhält der Verdeckstoff 1 die gewünschte Spannung und gewährleistet somit die Dichtheit zwischen Spannbügel 2 und dem Verdeckkastendeckel, sowie die einwandfreie Passform und ein optisch harmonisches Erscheinungsbild.

In Fig. 4 wird ein Schnitt durch den Spannbügel 2 im Eckbereich 21 bzw. durch den seitlichen Schenkel 9 des Spannbügels 2 gezeigt. Der Spannbügel 2 besteht vorzugsweise aus einem stranggepressten Leichtmetall-Hohlkammerprofil, wobei alle mit dem Verdeckstoff 1 in Berührung kommenden Kanten mit großen Radien versehen sind. Auf seiner Unterseite weist der Spannbügel 2 eine den Endbereich 3 des Verdeckstoffs 1 aufnehmende Nut 4 auf. Die Nut 4 besteht aus einer schlitzförmigen Öffnung 6, die in ihrer Breite in etwa der Dicke des Verdeckstoffs 1 entspricht. Das in den Spannbügel 2 ragende Ende der Nut 4 ist zur Aufnahme des Endbereichs 3 des Verdeckstoffs 1 kreisförmig vergrößert, wozu der Endbereich 3 des Verdeckstoffs 1 um ein Spannseil 10 umgelegt ist. Der umgelegte Bereich des Verdeckstoffs 1 und das darin geführte Spannseil 10 sind zusammen in ihrem Querschnitt erheblich größer als die schlitzförmige Öffnung 6 der nutförmigen Aufnahme 4, womit der Endbereich 3 des Verdeckstoffs 1 nicht aus seinem aufnehmenden Bereich herausgleiten kann und somit eine sichere Positionierung in der Nut gewährleistet.

Wie in der Abbildung von Fig. 4 gezeigt, ist der Endbereich 3 des Verdeckstoffs 1 kreisförmig vergrößert, wobei selbstverständlich auch andere Profilquerschnitte verwendet werden können. Zur Montage muss der vergrößerte Endbereich 3 des Verdeckstoffs 1 mit dem darin angeordneten Spannseil 10 von der Seite in diese nutförmige Aufnahme 4 eingeschoben werden.

Die Abbildung in Fig. 5 zeigt einen Längsschnitt in mittiger Lage durch den Spannbügel 2 mit erweiterter nutförmiger Aufnahme 4 und einen teilweise um die hintere Kante 8 des Spannbügels 2 verschobenen Verdeckstoff 1. Die in Fig. 4 beschriebene schlitzförmige Öffnung 6 ist hier zu einer stark erweiterten Öffnung 7 so umgestaltet, dass die kreisförmige Vergrößerung 5 des Endbereichs 3 des Verdeckstoffs 1 leicht herausgleiten kann.

Bei geschlossenem Verdeck und vollständig abgesenktem Spannbügel 2 sind das Spannseil 10, der Endbereich 3 des Verdeckstoffs 1 mit der kreisförmigen Vergrößerung 5, sowie die Nut 4 im Spannbügel 2 vertikal übereinander liegend angeordnet. D. h., dass sich das Spannseil 10 mit dem vergrößerten Endbereich 3 des Verdeckstoffs 1 entlang des gesamten Spannbügels 2 vollständig innerhalb der Nut 4 befindet. Erst beim Schwenken des Spannbügels 2 in eine angehobene Position gleitet das Spannseil 10 mit dem vergrößerten Endbereich 3 des Verdeckstoffs 1 im Bereich der erweiterten schlitzförmigen Öffnung 7 aus dieser heraus, da der nach oben schwenkende Spannbügel 2 den Verdeckstoff 1 während des Schwenkvorgangs erheblich stärker als in abgesenkter Position spannt. Über dieses Spannen des Verdeckstoffs 1 wird das Spannseil 10 mit dem vergrößerten Endbereich 3 aus dem Bereich der erweiterten schlitzförmigen Öffnung / Nut 7 herausgezogen. Der zurückgelegte Bereich, der beim Herausgleiten des Spannseils 10 entsteht, entspricht der durch das Schwenken des Spannbügels 2 entstehenden Spannung des Verdeckstoffs 1.

Beim Zurückschwenken des Spannbügels 2 liegt der Verdeckstoff 1 im Wesentlichen mit geringerer Spannung am Spannbügel 2 auf. Über das in den seitlichen Schenkeln 9 und den Eckbereichen 21 des Spannbügels 2 und in der Nut 4 geführte und verschiebbare Spannseil 10 wird der nicht geführte Bereich des Spannseils 10 wieder gestrafft und in die schlitzförmige Öffnung 6 hineingezogen, bis das Spannseil 10 wieder in der schlitzförmigen Öffnung 6 und in der erweiterten schlitzförmigen Öffnung 7 angeordnet positioniert ist.

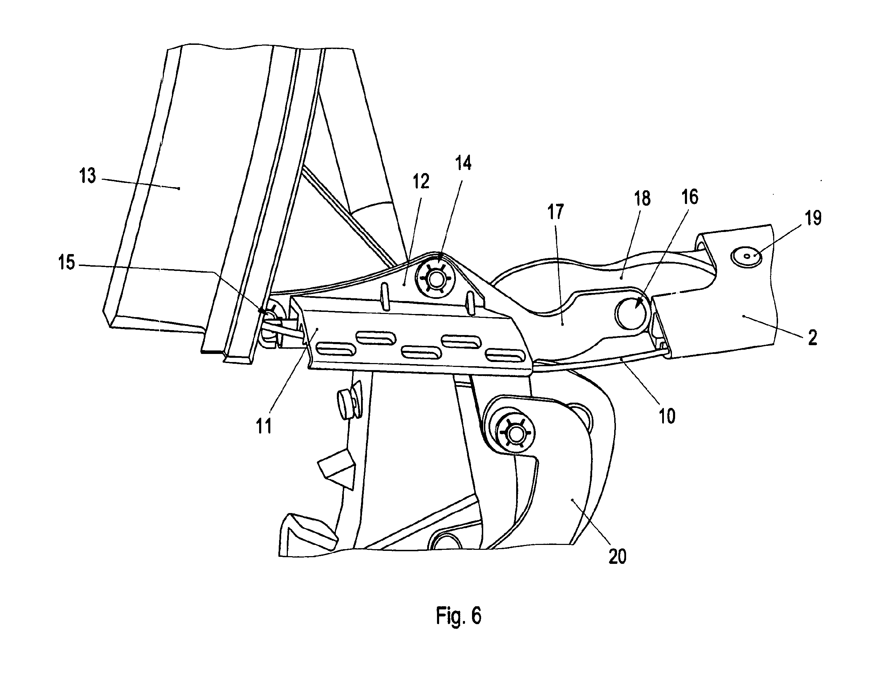

Die Fig. 6 zeigt die Anbindung und Führung des Spannseils 10 mittels einer Schiene 11, sowie die Koppelung des Spannbügels 2 an das Lenkergetriebe des Fahrzeugverdecks. Der U-förmige Spannbügel 2 ist an den Enden seiner Schenkel 9 über Winkelhebel 18 mit wenigstens einem Lenker 20 des Verdeckgetriebes verbunden, wobei der Spannbügel 2 an dem Winkelhebel 18 mittels wenigstens einer Nietverbindung 19 befestigt ist. Selbstverständlich können auch andere Befestigungsmittel wie Schrauben usw. verwendet werden.

Über einen Koppellenker 17 ist der Winkelhebel 18 in den Lagerungen 15, 16 mit der C-Säule 13 oder einem Hauptlenker verbunden. Der Koppellenker 17 steuert beim Schwenken des Spannbügels 2 außer der Schwenkbewegung auch mögliche überlagerte Längsbewegungen in oder entgegen der Fahrtrichtung. Etwa in mittiger Lage des Koppellenkers 17 ist eine Schiene 11, die an ihrer Oberseite einen Flansch 12 aufweist, schwenkbar im Lager 14 angebracht. Das Schienenprofil entspricht in Neigung und Verlauf dem des Verdeckstoffs 1 in diesem Bereich, wobei der Verdeckstoff 1 an der Schiene 11 befestigt ist. An der Unterseite der Schiene 11 sind Profilierungen zur Führung des Spannseils 10 angeformt. Schwenkt der Spannbügel 2 in eine aufrechte Position, wird die Schiene 11 über den Koppellenker 17 sowie durch das unterhalb der Schiene 11 geführte Spannseil 10 in eine an die Schräglage des Spannbügels 2 angepasste Lage geschwenkt, was durch die zusätzliche Beweglichkeit der Schiene 11 begünstigt wird.

Das Spannseil 10 ist mit seinen Enden an den C-Säulen 13 oder einem anderen Lenker, vorzugsweise einem Hauptlenker, befestigt. Dies kann beispielsweise durch Einhängen in eine an der C-Säule 13 befindlichen Öse oder durch eine Verschraubung erfolgen. Zusätzlich ist es möglich, dass das Spannseil 10 über Zugfedern mit der C-Säule 13 oder einem anderen Lenker verbunden ist. Es lassen sich somit Toleranzen ausgleichen, oder bei Bedarf eine weitere Dehnung und somit ein zusätzlicher Verschiebeweg des Endbereichs 3 des Verdeckstoffs 1 ermöglichen.

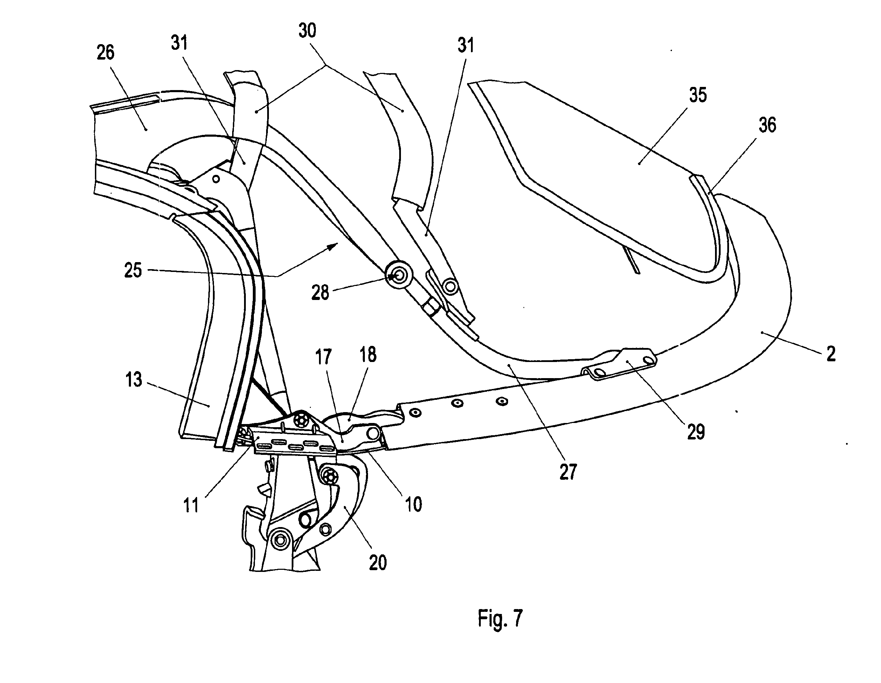

In Fig. 7 ist der hintere Bereich des geschlossenen Fahrzeugverdecks mit Spannseilführung mittels Schiene 11 und einer Sturmstange 25 abgebildet. Die Sturmstange 25 setzt sich aus einem vorderen Sturmstangenlenker 26 und einem hinteren Sturmstangenlenker 27 zusammen, die über das Gelenk 28 schwenkbar miteinander verbunden sind. Das Gelenk 28 befindet sich in etwa mittiger Lage der Sturmstange 25.

Der hintere Sturmstangenlenker 27 ist über einen Halter 29 bewegbar am Spannbügel 2 angebracht, wobei das vordere Ende des vorderen Sturmstangenlenkers 26 schwenkbar mit der C-Säule 13 oder einem Dachseitenträger verbunden ist. Über diesen Teil der vorderen Sturmstange 26 kann beispielsweise der Schwenkvorgang des Spannbügels 2 erfolgen, so dass bei sich öffnendem Fahrzeugverdeck die beiden Sturmstangenlenker 26, 27 sich aufeinander zu bewegen. Wird das Fahrzeugverdeck geschlossen, so wird der Spannbügel 2 abgesenkt, wobei die Haltekraft für die Vorspannung des Verdeckstoffs 1 über die Sturmstange 25 auf den Spannbügel 2 übertragen wird. Die Vorspannung entsteht durch die Umlenkung des Verdeckstoffs 1 um das hintere Ende 8 des Spannbügels 2, sowie durch das Spannseil 10, welches in die aufnehmende Nut 4 hineingezogen wird.

Die in Fig. 7 angedeutete Heckscheibe 35 ist beispielsweise frei in den Verdeckstoff 1 integriert und wird nur über die Verdeckstoffspannung in ihrer Betriebsstellung gehalten. Dies gilt ebenso für die dem Fahrzeugverdeck Form gebenden Spriegel 30, die ebenfalls nur über den Verdeckstoff 1 und Halterungen in ihrer Lage gehalten werden. Die somit durch den Verdeckstoff 1 aufzubringenden Spannungen werden über den Spannbügel 2 und die Sturmstange 25 aufgebracht.

### Bezugszeichenliste

- 1: Verdeckstoff
- 2: Spannbügel
- 3: Endbereich Verdeckstoff
- 4: Nut, nutförmige Aufnahme
- 5: kreisförmige Ausnehmung, Vergrößerung
- 6: schlitzförmige Öffnung
- 7: erweiterte schlitzförmige Öffnung
- 8: Hinterkante Spannbügel
- 9: Schenkel
- 10: Spannseil, Keder
- 11: Schiene
- 12: Flansch
- 13: C-Säule
- 14: Lagerung
- 15: Lagerung
- 16: Lagerung
- 17: Koppellenker, Verbindungslenker
- 18: Winkelhebel
- 19: Niet
- 20: Lenker
- 21: Eckbereich
- 22: Steg

- 25: Spurstange
- 26: vorderer Spurstangenlenker
- 27: hinterer Spurstangenlenker
- 28: Gelenk'
- 29: Halter
- 30: Spriegel

- 31: seitliche Spriegelhalterung
- 35: Heckscheibe (HKS)
- 36: Rahmen

## Patentansprüche

1. Faltverdeck mit veränderbarer Spannung des Verdeckstoffs für ein Fahrzeug, vorzugsweise für ein Kraftfahrzeug, das zwischen einer Schließposition und einer Ablageposition verstellbar ist, bestehend aus wenigstens einem Verdeckgestänge mit einer Mehrzahl quer zur Fahrtrichtung ausgerichteter Querspriegel, einem U-förmigen Spannbügel zum Spannen eines aus einem flexiblen Verdeckstoff bestehenden Bezugs, wobei der U-förmige Spannbügel über eine Sturmstange von einer den Verdeckstoff spannenden Position in eine den Verdeckstoff nicht spannende Position geschwenkt wird und der Verdeckstoff mit seinem Endbereich über eine Nut im U-förmigen Spannbügel aufgenommen ist,
**dadurch gekennzeichnet, dass** der Endbereich (3) des Verdeckstoffs (1) teilweise in der Nut (4) des U-förmigen Spannbügels (2) nicht herausgleitbar aufgenommen und gehalten wird und dass sich der aufnehmende Bereich auf die Schenkel (9) und die Eckbereiche (21) des U-förmigen Spannbügels (2) beschränkt.

2. Faltverdeck nach Anspruch 1,
**dadurch gekennzeichnet, dass** sich die Nut (4) entlang der Unterseite des U-förmigen Spannbügels (2) erstreckt.

3. Faltverdeck nach Anspruch 1 oder 2,
**dadurch gekennzeichnet, dass** der Endbereich (3) des Verdeckstoffs (1) im aufnehmenden und nicht herausgleitbaren Bereich des U-förmigen Spannbügels (2) entlang des Nutgrunds der Nut (4) eine kreisförmige Ausnehmung (5) aufweist und dass der Querschnitt der Nut (4) zwischen den seitlichen aufnehmenden Bereichen des U-förmigen Spannbügels (2) U-förmig ausgebildet ist.

4. Faltverdeck nach einem der Ansprüche 1 bis 3,
**dadurch gekennzeichnet, dass** der Übergang zwischen beiden Querschnitten der U-förmigen Nut (4) fließend erfolgt.

5. Faltverdeck nach Anspruch 1,
**dadurch gekennzeichnet, dass** der Endbereich (3) des Verdeckstoffs (1) ein Spannseil (10) umgreift.

6. Faltverdeck nach einem oder mehreren der vorangehenden Ansprüche,
**dadurch gekennzeichnet, dass** das Spannseil (10) mit dem Endbereich (3) des Verdeckstoffs (1) an den freien Enden des Spannbügels (2) hervortritt und dass das Spannseil (10) mit seinen Enden an einem Lenker des Dachlenkergetriebes befestigt ist.

7. Faltverdeck nach einem der Ansprüche 5 und 6,
**dadurch gekennzeichnet, dass** das aus den Enden des Spannbügels (2) hervortretende Spannseil (10) mit dem Endbereich (3) des Verdeckstoffs (1) teilweise unterhalb einer schwenkar befestigten Schiene (11) geführt wird.

8. Faltverdeck nach einem der Ansprüche 1 bis 3,
**dadurch gekennzeichnet, dass** der Endbereich (3) des Verdeckstoffs (1) beim Schwenken von der spannenden Position in die nicht spannende Position des Verdeckstoffs (1) aus der U-förmigen Nut (4) in Richtung der Hinterkante (8) des U-förmigen Spannbügels (2) gleitet.

9. Faltverdeck nach einem oder mehreren der vorangehenden Ansprüche,
**dadurch gekennzeichnet, dass** beim Schwenken des U-förmigen Spannbügels (2) in die spannende Position des Verdeckstoffs (1) der Endbereich (3) des Verdeckstoffs (1) mit dem Spannseil (10) vollständig in die Nut (4) zurückgleitet.

## Claims

1. Collapsible roof with adjustable tension of the roof material for a vehicle, preferably for a motor vehicle, which is displaceable between a closed position and a storage position, consisting of at least one roof linkage having a plurality of cross bows oriented transversely with respect to the direction of travel, and a U-shaped tensioning bar for tensioning a cover consisting of a flexible roof material, wherein the U-shaped tensioning bar is pivoted via a storm rod from a position tensioning the roof material into a position not tensioning the roof material, and the end region of the roof material is held in the U-shaped tensioning bar via a groove, **characterized in that** the end region (3) of the roof material (1) is partially held and retained in the groove (4) of the U-shaped tensioning bar (2) so as not to be able to slide out, and **in that** the holding region is restricted to the limbs (9) and the corner regions (21) of the U-shaped tensioning bar (2).

2. Collapsible roof according to Claim 1, **characterized in that** the groove (4) extends along the lower side of the U-shaped tensioning bar (2).

3. Collapsible roof according to Claim 1 or 2, **characterized in that** the end region (3) of the roof material (1) has a circular recess (5) along the base of the groove (4) in the holding region, which cannot be slid out from, of the U-shaped tensioning bar (2), and **in that** the cross section of the groove (4) between the lateral holding regions of the U-shaped tensioning bar (2) is of U-shaped design.

4. Collapsible roof according to one of Claims 1 to 3, **characterized in that** the transition between the two cross sections of the U-shaped groove (4) takes place in a flowing manner.

5. Collapsible roof according to Claim 1, **characterized in that** the end region (3) of the roof material (1) engages around a tensioning cable (10).

6. Collapsible roof according to one or more of the preceding claims, **characterized in that** the tensioning cable (10) emerges with the end region (3) of the roof material (1) at the free ends of the tensioning bar (2), and **in that** the ends of the tensioning cable (10) are fastened to a link of the roof link mechanism.

7. Collapsible roof according to either of Claims 5 and 6, **characterized in that** the tensioning cable (10) emerging from the ends of the tensioning bar (2) together with the end region (3) of the roof material (1) is partially guided below a pivotably fastened rail (11).

8. Collapsible roof according to one of Claims 1 to 3, **characterized in that** the end region (3) of the roof material (1) slides out of the U-shaped groove (4) in the direction of the rear edge (8) of the U-shaped tensioning bar (2) during the pivoting from the tensioning position into the non-tensioning position of the roof material (1).

9. Collapsible roof according to one or more of the preceding claims, **characterized in that**, during the pivoting of the U-shaped tensioning bar (2) into the tensioning position of the roof material (1), the end region (3) of the roof material (1) completely slides back into the groove (4) together with the tensioning cable (10).

## Revendications

1. Capote pliante avec une tension variable de la toile de la capote pour un véhicule, de préférence pour un véhicule automobile, qui peut être réglée entre une position de fermeture et une position de rangement, constituée d'au moins une tringlerie de capote avec une pluralité d'arceaux transversaux orientés transversalement à la direction de conduite, un étrier de tension en forme de U pour tendre un revêtement constitué d'une toile de capote flexible, l'étrier de tension en forme de U étant pivoté par le biais d'une barre anti-tempête depuis une position tendant la toile de capote dans une position ne tendant pas la toile de capote, et la toile de capote étant reçue avec sa région d'extrémité par le biais d'une rainure dans l'étrier de tension en forme de U,
**caractérisée en ce que** la région d'extrémité (3) de la toile de capote (1) est reçue en partie sans pouvoir en sortir par glissement dans la rainure (4) de l'étrier de tension (2) en forme de U et y est maintenue et **en ce que** la région de réception se limite aux branches (9) et aux régions de coin (21) de l'étrier de tension (2) en forme de U.

2. Capote pliante selon la revendication 1, **caractérisée en ce que** la rainure (4) s'étend le long du côté inférieur de l'étrier de tension (2) en forme de U.

3. Capote pliante selon la revendication 1 ou 2, **caractérisée en ce que** la région d'extrémité (3) de la toile de capote (1) présente, dans la région de réception ne pouvant pas ressortir par glissement de l'étrier de tension (2) en forme de U, le long de la base de la rainure (4), un évidement circulaire (5), et **en ce que** la section transversale de la rainure (4) est réalisée en forme de U entre les régions de réception latérales de l'étrier de tension (2) en forme de U.

4. Capote pliante selon l'une quelconque des revendications 1 à 3,
**caractérisée en ce que** la transition entre les deux sections transversales de la rainure en forme de U (4) s'effectue de manière fluide.

5. Capote pliante selon la revendication 1, **caractérisée en ce que**
la région d'extrémité (3) de la toile de capote (1) vient en prise autour d'un câble de tension (10).

6. Capote pliante selon l'une quelconque ou plusieurs des revendications précédentes, **caractérisée en ce que** le câble de tension (10) fait saillie avec la région d'extrémité (3) de la toile de capote (1) aux extrémités libres de l'étrier de tension (2) et **en ce que** le câble de tension (10) est fixé à ses extrémités à un bras oscillant du mécanisme à bras oscillants du toit.

7. Capote pliante selon l'une quelconque des revendications 5 et 6,
**caractérisée en ce que** le câble de tension (10) saillant hors des extrémités de l'étrier de tension (2) est guidé avec la région d'extrémité (3) de la toile de capote (1) en partie en dessous d'un rail (11) fixé de manière pivotante.

8. Capote pliante selon l'une quelconque des revendications 1 à 3,
**caractérisée en ce que** la région d'extrémité (3) de la toile de capote (1), lors du pivotement de la position de tension dans la position non tendue de la toile de capote (1), glisse hors de la rainure en forme de U (4) dans la direction de l'arête arrière (8) de l'étrier de tension (2) en forme de U.

9. Capote pliante selon l'une quelconque ou plusieurs des revendications précédentes, **caractérisée en ce que** lors du pivotement de l'étrier de tension (2) en forme de U dans la position de tension de la toile de capote (1), la région d'extrémité (3) de la toile de capote (1) revient avec le câble de tension (10) complètement en arrière par glissement dans la rainure (4).
